# EUROPEAN PATENT APPLICATION

(11) **EP 4 651 418 A1**
(43) Date of publication of application: **19.11.2025**
(21) Application number: 24176057.8
(22) Date of filing: 15.05.2024
(51) Int. Cl.: H04L 5/00, H04L 67/12, H04L 67/61, H04W 4/40, H04W 72/02

(54) **METHOD FOR ALLOCATING NETWORK SUPPLY IN A VEHICLE**

(71) Applicant: Bayerische Motoren Werke Aktiengesellschaft, 80809 München (DE)
(72) Inventor: Otsuka, Kohei, 85774 Unterföhring (DE)

(57) **Abstract**

A computer-implemented method for allocating network supply in a vehicle comprises the following steps: determining a network demand for a plurality of network applications of the vehicle; determining a network supply of at least one network module of the vehicle; generating an allocation scheme for the plurality of network applications based on an allocation model, the allocation model receiving the network demand, the network supply and driving operational data of the vehicle as input, the driving operational data comprising at least data from one or more driving automation system features of the vehicle; and allocating the network supply to the plurality of network applications in accordance with the allocation scheme.

## Description

The present disclosure relates to methods for allocating network supply in a vehicle.

In the evolving landscape of automotive technology, connected vehicles have become increasingly prevalent, integrating a multitude of network applications ranging from infotainment systems to driving automation system features, i.e. features providing some level of driving automation as defined by the taxonomy of driving automation defined by standard SAE J3016. These applications often require real-time data communication with external networks to function effectively, such as downloading multimedia content, traffic updates, maps for navigation, software updates and other data types.

The complex network demand in the vehicle leads to a situation where the network applications compete for the finite vehicle's onboard network hardware and software (HW/SW) resources of one or more network modules, which may include bandwidth, processing power, and storage. As a result, critical functions, such as those required for driving automation system features, may be compromised due to network supply being consumed by less critical applications like infotainment applications, e.g. downloads of videos.

One approach to manage limited network supply is to employ static prioritization rules that rigidly allocate resources based on predefined priorities, favoring safety-related functions over entertainment or convenience features. However, such static rules are unable to adapt to the dynamic nature of driving environments, user preferences, and fluctuating network conditions. To the contrary, these rules are designed to ensure that, regardless of network supply and remaining network demands, the safety-related functions always maintain their required level of service. However, this may result in inefficient use of network resources and suboptimal user experience.

As another approach to managing network supply in a vehicle, bandwidth allocation protocols may be adopted to allocate bandwidth among different network applications, such as the Weighted Fair Queuing (WFQ) algorithm. However, such protocols merely aim to distribute network resources fairly or according to predefined weights but are unable to cope with complex situational restrictions in the context of modern vehicles in which many different network applications are running in parallel.

Quality of Service (QoS) management may be implemented in specific cellular network standards, e.g. 5G, but they do not integrate with the vehicle's operational systems, such as driving automation system features, and are not designed to consider vehicle-specific network restrictions outside the scope of a given cellular network connection.

Apart from the general question of allocating network supply in a vehicle there is growing conflict between ensuring the performance of safety-critical systems, such as driving automation system features, and also fulfilling user demands for infotainment content, especially under varying network conditions and operational contexts. As a result, suboptimal user experience may be negatively impacted, especially when the safety functions in fact do not require immediate network resources. Users may face interruptions or delays in an infotainment application
without understanding the reason or being able to influence the prioritization provided by static safety rules.

It is an object of the invention to provide a method for improved allocation of network supply in a vehicle.

In one aspect, the present disclosure is directed at a computer-implemented method for allocating network supply in a vehicle, the method comprising the following steps carried out by computer hardware components: determining a network demand for a plurality of network applications of the vehicle; determining a network supply of at least one network module of the vehicle; generating an allocation scheme for the plurality of network applications based on a predefined allocation model, the allocation model receiving the network demand and the network supply as input; and allocating the network supply to the plurality of network applications in accordance with the allocation scheme.

The method provides a more intelligent and adaptive approach for allocating network supply in a vehicle. It goes beyond static priority rules in that a dedicated allocation model considers the available network supply and the network demand by the network applications running in the vehicle. On this basis the allocation model is used to generate an allocation scheme which effects a distribution of the available network supply between the data consuming network applications for optimum use of the network supply while also taking into account safety restrictions and user experience and possibly further factors relevant for an optimized allocation.

In an embodiment the method further comprises determining a network usage for the plurality of network applications, wherein the allocation model further receives the network usage as input. While the network demand may be sufficient to describe the network usage, this may not always be the case. For example, an autonomous driving application may be configured to download or update a geographical navigation map with high resolution, thereby requiring a big portion of the available network supply. However, the application does not always require the map at any time. For example, if a driving automation system feature causes the vehicle to follow another vehicle on a motor way, the map material is not required, i.e. not used. In another example, a bandwidth or time slot may be occupied by a given network application, but the application does not use this slot for data transmission. Therefore, the network demand may be different from the network usage. Generating the allocation scheme also on the basis of the network usage may thus greatly enhance an efficient allocation of the available network supply.

The allocation model further receives driving operational data of the vehicle as input, the driving operational data comprising at least data from one or more driving automation system features of the vehicle and may further comprise at least one of positional data of the vehicle and vehicle sensor data. Vehicle sensor data may be data from one or more sensors mounted at the vehicle, such as a radar sensor and/or a lidar sensor or other sensors for capturing the vicinity of the vehicle in view of providing driving automation system features with required sensor data for providing the corresponding level of driving automation. Positional data may be provided by other sensors mounted at the vehicle for localizing the vehicle with respect to a navigation map. For example, the positional data may comprise data from a GPS-sensor of the vehicle. The data from driving automation system features may include an activation state (e.g., is the vehicle being controlled by one of the driving automation system features). It may also comprise more detailed information such as whether a driving automation system feature currently relies on a navigation map or not. In particular, the vehicle may currently be controlled by a driving automation system feature that may temporarily rely on following a lead vehicle without using high-definition map data. The driving operational data allows the allocation model to take into account context awareness in view of the current driving situation and the required degree of network supply. This allows to allocate the network supply more efficiently than for example with static priority rules.

In another embodiment a user preference is determined at the vehicle, wherein the allocation model further receives the user preference as input. By determining user preference the allocation model may take into account preferences of the driver or other passengers in the vehicle in view of the allocation of the network supply. For example, the user may input a priority of a given infotainment application requiring data transmission capacities of the network module for downloading a high-definition video stream. The allocation model may then process this input to satisfy this preference and reduce the allocation for another application with less priority. For example, the network supply of an application for displaying high-definition map data on a screen in the vehicle may be reduced. The user preference may be input at a user interface in the vehicle, for example a touch-sensitive screen or via a voice-recognition system capturing a voice command of the driver or another passenger.

In another embodiment network operational data is output at the user interface of the vehicle. The network operational data comprises data representing the allocation scheme, the network demand and/or the network supply. The network operational data allows the driver or another passenger to understand the current network access or consumption by various applications running on the computer hardware components of the vehicle. Th user will then be in a better position to provide suitable user preferences or to avoid frustration due to suboptimal user experience in view of one of more applications. For example, the use may better understand reasons for degraded speech quality during a cellular telephone call or forced interruptions while watching a video that is downloaded via the network module.

In another embodiment an allocation recommendation is determined based on the predefined allocation model. The allocation recommendation is then outputted at the user interface of the vehicle. The recommendation may comprise an offer for deactivating a driving automation system feature in order to satisfy a user preference of allowing a video download at high data-transmission speed. The allocation system may in this way interact with the user to actively optimize the user needs and to convey specific reasons and restrictions of the current network allocation scheme.

The network supply may comprise different aspects of using one or more network modules in the vehicle. For example, the network module may manage one or more wireless connections to external networks, in particular a cellular network. The network supply may also represent a network access property, such as an access time, or processing resources of the network module for processing the data. Another type of network that may be supported by the vehicle network module may be a wireless local area network (WLAN) or a similar network type including an ad-hoc network.

In another embodiment the allocation of the network supply comprises assigning an access rule for at least some of the network applications, respectively, wherein the access rule defines a limitation of the network supply and/or a priority rank for the assigned network application, the limitation of the network supply preferably limiting one or more of the following: a network or data type, a data transmission speed, a data transmission volume, a network access duration, a network access frequency, a network bandwith. The priority rank may be defined as an integer on a predefined scale, wherein the maximum rank may be equal to the number of network applications.

In another embodiment the allocation model further receives a predefined set of safety rules as input, the safety rules representing at least one priority of a first network application over a second network application. Safety rules may represent fallback strategies that overrule user preferences in case of unexpected degradation of network supply. This may be useful to ensure that safety relevant functions, e.g. driving automation system features or emergency functions, work properly.

In another embodiment the allocation scheme comprises an operational instruction for one or more of the network applications to change its operational mode for reducing the network demand. For example, a cellular network application in the vehicle may be requested to change the speech-transmission codec to a codec of lower data consumption, while the telephone call may be continued and does not need to be terminated. The operational instruction helps to actively modify the network related data consumption of the network applications in order to obtain a network allocation that better satisfies conflicting network demands by the applications.

In another embodiment the allocation model is optimized during operation of the vehicle based on a difference between the network demand and the network supply. For example, if the network demand of one of the applications is higher than the allocated portion of the network supply the allocation model may be optimized to allocate a bigger portion of the supply. It is understood that further optimization criteria may be formulated as cost functions for implementing a self-learning allocation model. In particular, the allocation model may use the operational input also as training data so that the model performance increases over the time of its operational use. The allocation model may comprise an artificial neural network and/or predefined rules. The model is preferably configured to model patterns in the input data, which allows the model to also predict adequate allocation schemes. For example, if the vehicle travels on the same route many times, the driving operational data fed into the model will help to foresee a local network degradation where network supply will be reduced. The allocation model may, however, provide an adapted allocation scheme, before reaching the area of network degradation. In this way, undesired network congestions and undersupply of the applications may be avoided.

In another aspect, the present disclosure is directed at a computer system, said computer system comprising a plurality of computer hardware components configured to carry out several or all steps of the computer-implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer-implemented method in the computer system. The non-transitory data storage and/or the memory unit may comprise a computer program for instructing the computer system to perform several or all steps or aspects of the computer-implemented method described herein, for example using the processing unit and the at least one memory unit.

In another aspect, the present disclosure is directed at a vehicle comprising said computer system and at least and at least one network module for providing network access to a plurality of network applications running on the computer system.

In another aspect, the present disclosure is directed at a non-transitory computer readable storage comprising instructions which, when executed by a processor, cause (or make) a processor of a computer system to carry out several or all steps or aspects of the computer-implemented method described herein. The computer readable storage may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable storage may be configured as a data storage that is accessible via a data connection, such as an internet connection. The computer readable storage may, for example, be an online data repository or a cloud storage.

The present disclosure is also directed at a computer program for instructing a computer system to perform several or all steps or aspects of the computer-implemented method described herein.

Exemplary embodiments and functions of the present disclosure are described herein in conjunction with the following drawings, showing schematically:
Fig. 1 a schematic flow chart of a method for allocating network supply in a vehicle according to one aspect of the disclosure;
Fig. 2 a schematic flow chart for illustrating aspects of the method from Fig. 1;
Fig. 3 a schematic diagram illustrating various network applications connected to a network module;
Fig. 4 a computer readable storage; and
Fig. 5 a computer system for carrying out the method from Fig. 1.

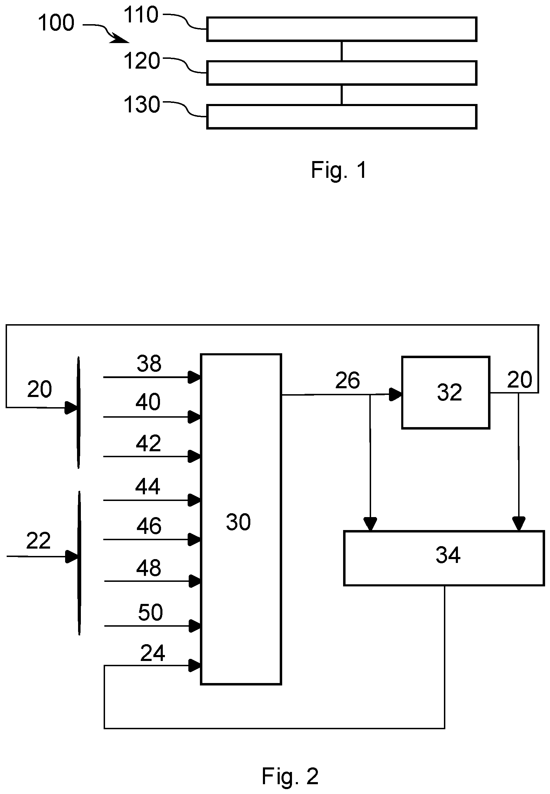

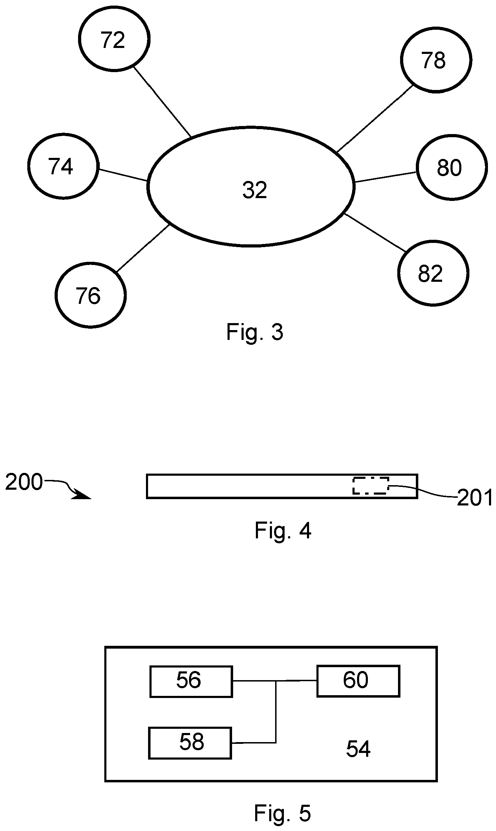

A computer-implemented method 100 for allocating network supply for various network applications in a vehicle comprises at a plurality of steps 110, 120, and 130, cf. Fig. 1. The individual steps are described with further reference to Fig. 2 and Fig. 3.

In step 110 network operational data 20 is determined. The network operational data 20 comprises a network demand 38 for a plurality of network applications 72, 74, 76, 78, 80, and 82 (cf. Fig. 3). These applications are in detail an infotainment application 72 (e.g., a video movie stream), a telephone application 74 (e.g., via a cellular network), a navigation application 76 (e.g., instructing a driver to follow a route to a desired target), a first driving automation system feature 78 (e.g., a lane assistant for automated steering of the vehicle on a motorway lane), a second driving automation system feature 80 (e.g., fully autonomous vehicle control on a motorway, i.e. a feature providing high driving automation / level 4 as defined in standard SAE J3016), and an emergency application 82 (e.g., automatic notification of a rescue service in case of a detected accident of the vehicle). Each application is associated with a software and/or hardware module configured to operate the application. The network operational data 20 further comprises a current network supply 42 of a network module 32 installed in the vehicle, in particular a current data transmission speed for transmission of data from an external server to the vehicle or vice versa. Other types of network parameters are possible which generally represent the current network capabilities of the network module 32 in view of providing the applications 72, 74, 76, 78, 80, 82 with access to various networks. The network operational data 20 further comprises a current network usage 40 representing an actual use of the network supply 42. The network usage 30 may be lower than the network demand 38.

The vehicle may be a passenger vehicle (not shown) or any other vehicle with various network applications sharing limited network supply capacities provided by the network module 32.

In step 120 allocation scheme data 26 for the plurality of network applications 72, 74, 76, 78, 80, and 82 is generated based on a predefined allocation model 30. The allocation model 30 is an artificial neural network configured to output the allocation scheme data 26 based on various inputs, including the network operational data 20, cf. Fig. 2. The individual inputs are described in further detail below. In step 130 the network supply 42 is allocated to the plurality of network applications 72, 74, 76, 78, 80, 82 in accordance with the allocation scheme data 26. The allocation scheme data 26 assigns a limitation of the network supply of module 32 for each of the applications 72, 74, 76, 78, 80, 82, respectively. In particular, the allocation scheme data 26 limits the network supply 42 of the module 32 for each application with respect to a maximum data transmission speed. The maximum allocated speed may vary between individual applications according to the allocation scheme data 26. In one example, the overall maximum data transmission speed of a cellular network connection of network module 32 may be 10 GB/s. The maximum allowed transmission speed per application is preferably a fraction of 10 GB/s, for example 2GB/s for the infotainment application 72. Other maximum transmission speeds may be allocated for the other applications.

The allocation scheme data 26 is used for network-related control of the network applications 72, 74, 76, 78, 80, 82 connected to the network module 32. The resulting network operational data 20 is monitored during operation and fed back as input to the allocation model 30. The allocation model 30 outputs updated allocation scheme data 26 in regular time intervals or in dependence of specific trigger events such as a deactivation of one of the applications 72, 74, 76, 78, 80, and 82 or in response to receiving user preference data 24 at the allocation model 30. The user preference data 24 is input by the driver or another passenger through a user interface 34 at the vehicle.

The allocation scheme data 26 is displayed at the user interface 34 for interaction with one or more passengers including the driver of the vehicle. The allocation scheme data 26 may also include a recommendation to change an operational mode of one or more of the applications 74, 76, 78, 80, 82 to reduce the network demand 38.

The user interface 34 receives the network operational data 20 for informing the driver or other passengers on a current network supply situation for the various applications 72, 24, 76, 78, 80, 82, for example via graphical symbols or text messages representing a current network usage 40 or undersupply of individual applications.

The allocation model 30 receives as further input driving operational data 22 of the vehicle. This data 22 includes positional data 44 from a vehicle position sensor (e.g. GPS sensor), driving automation system feature data 46 (data from the first driving automation system feature 78 and/or the second driving automation system feature 80), vehicle sensor data 48 (e.g., semantic traffic context derived from radar sensor data and/or the sensor data itself), and predefined safety rules 50 (e.g., second driving automation system feature 80 has priority over infotainment application 72 if network supply 42 is degraded).

Each of the steps 110, 120, 130, and further steps described above may are performed by computer hardware components. In this respect Fig. 5 shows a computer system 54 with a plurality of computer hardware components configured to carry out the steps of the computer-implemented method 100 for allocating network supply based on an allocation model 30, as generally described in connection with Fig. 1 and in greater detail with respect to Fig. 2 and Fig. 3. The computer system 54 may include a processor 56, a memory 60, and a non-transitory data storage 58. The processor 56 may carry out instructions provided in the memory 60. The non-transitory data storage 58 may store a computer program 200, including instructions 201 for carrying out the method 100, cf. Fig. 2. The computer program 200 may be transferred to the memory 60 and then executed by the processor 56. The processor 56, the memory 60, and the non-transitory data storage 58 may be coupled with each other, e.g. via an electrical connection, such as, e.g., a cable or a computer bus or via any other suitable electrical connection to exchange electrical signals. The terms "coupling" or "connection" are intended to include a direct "coupling" (for example via a physical link) or direct "connection" as well as an indirect "coupling" or indirect "connection" (for example via a logical link), respectively.

The method 100 is configured to provide real-time assessment and optimization of allocating the network supply 42 based on the allocation model 30, which takes into account the vehicle's current environment through various inputs 38, 40, 42, 44, 46, 48, 50 and 24. These inputs also cover user demands and encodes the relative importance of the various applications 72, 74, 76, 78, 80, and 82 with respect to each other. In this way, the available resources of network module 32 are dynamically allocated based on a situational awareness of the network and driving operational status of the vehicle and possible user input, thereby enhancing the overall functionality and safety of connected vehicles while also catering to the preferences and needs of the occupants.

### List of Reference Signs

- 20: network operational data
- 22: driving operational data
- 24: user preference data
- 26: allocation scheme data
- 30: allocation model
- 32: network module
- 34: user interface
- 38: network demand
- 40: network usage
- 42: network supply
- 44: positional data
- 46: driving automation system feature data
- 48: vehicle sensor data
- 50: safety rules
- 54: computer system
- 56: processor
- 58: non-transitory data storage
- 60: memory
- 72: infotainment application
- 74: telephone application
- 76: navigation application
- 78: first driving automation system feature
- 80: second driving automation system feature
- 82: emergency application
- 100: method
- 110: determining network operational data
- 120: determining allocation scheme
- 130: allocating the network supply
- 200: computer program
- 201: computer instructions

## Claims

1. Computer-implemented method for allocating network supply in a vehicle, the method comprising the following steps carried out by computer hardware components:
determining a network demand (38) for a plurality of network applications (72, 74, 76, 78, 80, 82) of the vehicle;
determining a network supply (42) of at least one network module (32) of the vehicle;
generating an allocation scheme (26) for the plurality of network applications (72, 74, 76, 78, 80, 82) based on an allocation model (30), the allocation model (30) receiving the network demand (38), the network supply (42) and driving operational data (22) of the vehicle as input, the driving operational data (22) comprising at least data (46) from one or more driving automation system features (78, 80) of the vehicle; and
allocating the network supply (42) to the plurality of network applications (72, 74, 76, 78, 80, 82) in accordance with the allocation scheme (26).

2. Computer-implemented method of claim 1,
further comprising determining a network usage (40) for the plurality of network applications (72, 74, 76, 78, 80, 82), wherein the allocation model (30) further receives the network usage (40) as input.

3. Computer-implemented method of one of the preceding claims,
wherein the driving operational data (22) further comprise at least one of positional data (44) of the vehicle and vehicle sensor data (48).

4. Computer-implemented method of one of the preceding claims,
further comprising determining a user preference (24) at the vehicle, wherein the allocation model (30) further receives the user preference (24) as input.

5. Computer-implemented method of one of the preceding claims,
further comprising outputting network operational data (20) at a user interface (34) of the vehicle, the network operational data (20) comprising data representing the allocation scheme (26), the network demand (38) and/or the network supply (42).

6. Computer-implemented method of claim 5,
further comprising determining an allocation recommendation based on the predefined allocation model (30) and outputting the allocation recommendation at the user interface (34) of the vehicle.

7. Computer-implemented method of one of the preceding claims,
wherein allocating the network supply (42) comprises assigning an access rule for at least some of the network applications (72, 74, 76, 78, 80, 82), respectively, wherein the access rule defines a limitation of the network supply (42) and/or a priority rank for the assigned network application, the limitation of the network supply (42) preferably limiting one or more of the following: a network or data type, a data transmission speed, a data transmission volume, a network access duration, a network access frequency, a network bandwidth.

8. Computer-implemented method of one of the preceding claims,
wherein the allocation model (30) further receives a predefined set of safety rules (50) as input, the safety rules (50) representing at least one priority of a first network application (78, 80, 82) over a second network application (72).

9. Computer-implemented method of one of the preceding claims,
wherein the allocation scheme (26) comprises an operational instruction for one or more of the network applications (72, 74, 76, 78, 80, 82) to change its operational mode to reduce the network demand (38) and/or the network usage (40).

10. Computer-implemented method of one of the preceding claims,
wherein the allocation model (30) is optimized during operation of the vehicle based on a difference between the network demand (38) and the network supply (42).

11. Computer-implemented method of one of the preceding claims,
wherein the allocation model (30) comprises an artificial neural network.

12. Computer system (54) comprising a plurality of computer hardware components (56, 58, 60) configured to carry out at least some steps of the computer-implemented method (100) of one of the preceding claims.

13. Vehicle comprising the computer system (54) of claim 12 and at least one network module (32) for providing network access to a plurality of network applications (72, 74, 76, 78, 80, 82) running on the computer system (54).

14. Non-transitory computer readable storage (58) comprising instructions for carrying out the computer-implemented method (100) of at least one of claims 1 to 11.
